# EUROPÄISCHE PATENTSCHRIFT

(11) **EP 2 093 081 B1**
(45) Veröffentlichungstag und Bekanntmachung des Hinweises auf die Patenterteilung: **30.07.2014**
(21) Anmeldenummer: 08170419.9
(22) Anmeldetag: 02.12.2008
(51) Int. Cl.: B60C 11/13

(54) **Fahrzeugluftreifen**
Pneumatic tyres for a vehicle
Pneus de véhicule

(30) Priorität: 22.02.2008 DE 102008010699
(43) Veröffentlichungstag der Anmeldung: 26.08.2009
(73) Patentinhaber: Continental Reifen Deutschland GmbH, 30165 Hannover (DE)
(72) Erfinder: Behr, Ulrich, 30169 Hannover (DE); Brockmann, Jürgen, 30167 Hannover (DE); Woidtke, Oliver, 30855 Langenhagen (DE)
(74) Vertreter: Finger, Karsten

(56) Entgegenhaltungen:
- JP-A- 1 153 304
- JP-A- 2004 203 173
- JP-A- 2008 037 219

## Beschreibung

Die Erfindung betrifft einen Fahrzeugreifen, vorzugsweise einen Fahrzeugluftreifen, mit einem Laufstreifen, welcher durch Umfangsrillen und sonstige Rillen gebildete Profilpositive, wie Blöcke, Bänder oder blockartige Profilelemente aufweist, wobei die Rillen seitlich durch Rillenflanken und nach radial innen durch Rillengründe begrenzt werden, wobei wenigstens eine Rillenflanke - in einer Schnittebene betrachtet, welche senkrecht zur Erstreckung derjenigen Rille, welche durch diese Rillenflanke seitlich begrenzt wird, liegt- zur Verbreiterung der Rillenbreite nach radial außen, durch axial aneinander angrenzende Radien gebildet wird, die Radien konvex in Richtung Profilpositiv hervorstehend, oder die Radien konkav in Richtung Rille hervorstehend, ausgebildet sind.

Derartige Rillengestaltungen sind hinreichend bekannt. Die den nächstliegenden Stand der Technik bildende JP-A-2008 037 219 offenbart einen Fahrzeugluftreifen mit einem Laufstreifenprofil mit einer Umfangsrille, deren axial äußere Rillenflanke Profilblöcke einer Schulterblockreihe in Umfangsrichtung begrenzt. Die Rillenflanke weist in ihrem zentralen Flankenbereich vier axial aneinander angrenzende Radien auf, welche konvex in Richtung Profilpositiv hervorstehen und in diesem zentralen Blockflankenbereich die axiale Breite der Rille nach radial außen erweitern. Die in Umfangsrichtung vor und hinter dem zentralen Flankenbereich angrenzenden Flankenbereiche sind jedoch als Gerade ausgebildet. Diese spezielle Flankengestaltung soll die Kurvenfahrleistung, die Lenkstabilität sowie die Traktion des Fahrzeugluftreifens verbessern.

Die US 3,707,177 B1 offenbart ein Laufstreifenprofil mit Rillen, welche radial außen einen verbreiterten Querschnitt aufweisen. Das Laufstreifenprofil soll auf winterlicher Fahrbahn eine bessere Schnee-Schnee-Reibung ermöglichen, in dem durch den verbreiterten Rillenquerschnitt mehr Schnee in die Rille einpressbar ist. Aus der US 5,456,301 B1 ist ein Reifenprofil mit Rillen und Profilpositiven bekannt geworden, deren Rillenkontur im Rillenquerschnitt betrachtet, radial außen eine in das Profilelement hineinweisende Ausnehmung aufweist, während die Flankenkontur in Richtung Rillengrund in etwa eine Gerade darstellt. Durch eine derartige Kontur der Rillenflanken soll das chunking der Profilblockkanten vermieden werden.

Der Erfindung liegt die Aufgabe zu Grunde, einen Fahrzeugreifen mit einem Laufstreifenprofil zu schaffen, das hinsichtlich seines Wasserdrainagevermögens verbessert ist.

Die Aufgabe wird gelöst, indem die Rillenflanke aus zwei axial aneinander angrenzende Radien gebildet ist, wobei der erste Radius, welcher an den Rillengrund anschließt, den radial inneren Abschnitt der Rillenflanke bildet und innerhalb einer axialen Breite und in einer radialen Höhe ausgebildet ist und wobei der zweite Radius an den ersten Radius unter Bildung einer sich in etwa parallel zur Rillenerstreckung erstreckenden Kante anschließend angeordnet ist und den radial oberen Abschnitt der Rillenflanke bildet, wobei der zweite Radius innerhalb einer axialen Breite und in einer radialen Höhe ausgebildet ist und dass die zwei Radien über die gesamte Rillenerstreckung an der Rillenflanke ausgebildet sind.

Die besondere Ausführung der Rillenflanken mit einer aus zwei Radien unter Bildung einer hervorstehenden Kante bestehenden Flankenfläche bewirkt ein Kanalisieren der in diese Rillen aus dem Untergrund eintretenden Wassermassen. Durch die vergrößerte Flankenoberfläche können größere Wassermassen in der Rille transportiert werden. Es erfolgt ein weitgehend verwirbelungsfreies Leiten der Wassermassen, die entlang der Rillenerstreckung abtransportiert werden. Durch die zusätzliche Kante wird eine Vergleichmäßigung des Wasserstroms erzeugt.
Zugleich hat sich gezeigt, dass durch diese Rillenkontur ein Ein- und Ausformen des Reifenrohlings bei der Vulkanisation verbessert ist.

Die beiden, eine Rillenflanke bildenden Radien können dabei derart mit einer Höhe h₂ ≥ h₁ ausgebildet sein, wobei h₁ ≥ 2mm ist. Die Höhe h1 muss größer gleich 2mm sein, damit die gewünschte Wirkung auftreten kann. Die Höhe h2 ist größer gleich h1, damit trotz des Abriebes über die Lebensdauer des Reifens die gewünschte Wirkung, erhaltbar ist.

In einer bestimmten Ausführungsform sind beide Flanken einer Rille durch je den ersten und zweiten Radius gebildet. Dabei können beide Flanken der Rille symmetrisch ausgebildet sein oder aber auch unsymmetrisch ausgebildet sind. Durch eine symmetrische Ausbildung ist ein homogenes Abriebsbild erhaltbar. Durch eine asymmetrische Ausbildung können Verwirbelungen besser vermieden werden.

In einer besonderen Ausführungsform ist der radial innere Kreisbogenabschnitt mit einem Radius von 3,5mm und der radial äußere Kreisbogenabschnitt mit einem Radius von 11mm ausgebildet. Es hat sich gezeigt, dass diese Ausbildung die beste erwünschte Wirkung erzielt.

In einer weiteren Ausführungsform ist der radial innere Kreisbogen in einer über der Rillenerstreckung konstanten Breite ausgeführt, während der radial äußere Kreisbogen in einer über der Rillenerstreckung nicht konstanten, also wechselnden Breite ausgeführt ist. Weitere Merkmale, Vorteile und Einzelheiten der Erfindung werden anhand der Zeichnungen, die schematische Ausführungsbeispiele darstellen, näher erläutert. Es zeigen die:
Fig.1 eine dreidimensionale Ansicht eines Ausschnittes einer linken Rillenflanke;
Fig.2 einen Schnitt einer anderen Rille quer zur Rillenerstreckung.

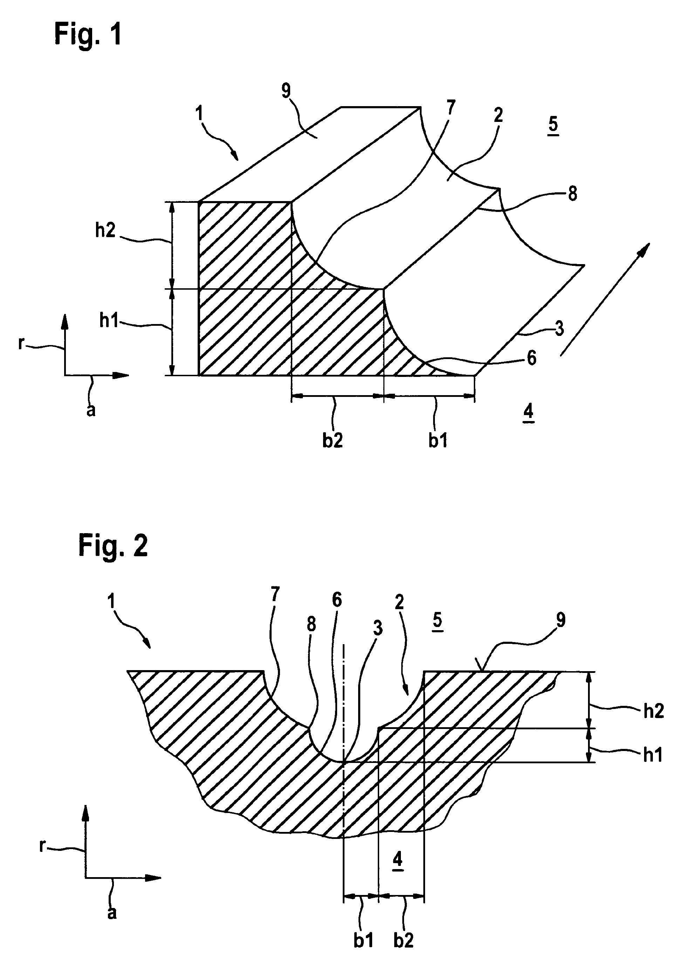

Die **Fig. 1** zeigt eine dreidimensionale Ansicht eines Ausschnittes einer linken Rillenflanke 2 eines durch Umfangsrillen oder sonstigen Rillen gebildeten Profilpositiven 1 eines Laufstreifens eines PKW-Fahrzeugluftreifens. Die Rillenflanke 2 - in einer Schnittebene betrachtet, die senkrecht zur Erstreckung der Rille (Pfeil) liegt - ist zur Verbreiterung der Rillenbreite nach radial außen 5 in Richtung Profiloberfläche 9 durch zwei aneinander angrenzende Radien 6,7, gebildet. Die Radien 6,7 stellen Kreisbogenabschnitte dar. Die Radien 6,7 sind konvex in Richtung Profilpositiv 1 hervorstehend ausgebildet. Der erste Radius 6 schließt an den Rillengrund 3 an und bildet den radial inneren Abschnitt der Rillenflanke. Der Radius ist innerhalb einer axialen Breite b1 und einer radialen Höhe h1 angeordnet. Oberhalb des Endes des ersten Radius 6 schließt ein zweiter Radius 7 an das obere Ende des ersten Radius 6 unter Bildung einer Kante 8 an. Die Kante 8 verläuft in etwa parallel zur Erstreckung der Rille (Pfeil) auf gleicher Höhe h1. Der zweite Radius 7 ist ebenfalls ein Kreisbogenabschnitt, welcher konvex in Richtung Profilpositiv 1 hervorstehend ausgebildet ist. Der zweite Radius ist innerhalb einer axialen Breite b2 und einer radialen Höhe h2 angeordnet. Die Breiten b1 und b2, aber auch die Höhen h1 und h2 überschneiden einander nicht, sondern schließen aneinander an. In dieser Ausführung sind die Radien 6,7 gleich groß und auch b1 = b2 = h1 = h2.

Die **Fig.2** zeigt einen Schnitt einer anderen Rille quer zur Rillenerstreckung. Die Rillenflanke 2 ist zur Verbreiterung der Rillenbreite nach radial außen 5 in Richtung Profiloberfläche 9 durch zwei aneinander angrenzende Radien 6,7, gebildet. Die Radien 6,7 stellen Kreisbogenabschnitte dar. Die Radien 6,7 sind konvex in Richtung Profilpositiv 1 hervorstehend ausgebildet. Der erste Radius 6 schließt an den Rillengrund 3 an und bildet den radial inneren Abschnitt der Rillenflanke 2. Der Radius 6 ist innerhalb einer axialen Breite b1 und einer radialen Höhe h1 angeordnet. Oberhalb des Endes des ersten Radius 6 schließt ein zweiter Radius 7 an das obere Ende des ersten Radius 6 unter Bildung einer Kante 8 an. Die Kante 8 verläuft in etwa parallel zur Erstreckung der Rille. Der zweite Radius 7 ist ebenfalls ein Kreisbogenabschnitt, welcher konvex in Richtung Profilpositiv 1 hervorstehend ausgebildet ist. Der zweite Radius 7 ist innerhalb einer axialen Breite b2 und einer radialen Höhe h2 angeordnet. Die Breiten b1 und b2 aber auch die Höhen h1 und h2 überschneiden einander nicht, sondern schließen aneinander an. In dieser Ausführung sind die Radien 6,7 ungleich groß, wobei der radial innere Radius 6 kleiner als der radial äußere Radius 7 ist. b1 < b2, h1 < h2, b1 = h1, b2 = h2.

Es sind ebenfalls Ausführungen möglich, bei denen der radial innere Radius 6 über seine Erstreckung gleich ausgebildet ist, während der radial äußere Radius 7 über seine Erstreckung in b2 und h2 variieren kann.

### Bezugszeichenliste

### (Teil der Beschreibung)

- 1: Profilpositiv
- 2: Rillenflanke
- 3: Rillengrund
- 4: radial innen
- 5: radial außen
- 6: Radius
- 7: Radius
- 8: Kante
- 9: Profiloberfläche

- b1: Breite innerhalb der der Radius ausgebildet ist
- b2: Breite innerhalb der der Radius ausgebildet ist
- h1: Höhe innerhalb der der Radius ausgebildet ist
- h2: Höhe innerhalb der der Radius ausgebildet ist

## Patentansprüche

1. Fahrzeugreifen mit einem Laufstreifen, welcher durch Umfangsrillen und sonstige Rillen gebildete Profilpositive (1), wie Blöcke, Bänder oder blockartige Profilelemente aufweist, wobei die Rillen seitlich durch Rillenflanken (2) und nach radial innen (4) durch Rillengründe (3) begrenzt werden, wobei wenigstens eine Rillenflanke (2) -in einer Schnittebene betrachtet, welche senkrecht zur Erstreckung derjenigen Rille, welche durch diese Rillenflanke (2) seitlich begrenzt wird, liegt- zur Verbreiterung der Rillenbreite nach radial außen (5), durch axial aneinander angrenzende Radien (6,7) gebildet wird, die Radien (6,7) konvex in Richtung Profilpositiv (1) hervorstehend, oder die Radien (6,7) konkav in Richtung Rille hervorstehend, ausgebildet sind,
**dadurch gekennzeichnet, dass** die Rillenflanke aus zwei axial aneinander angrenzende Radien (6,7) gebildet ist,
wobei der erste Radius (6), welcher an den Rillengrund (3) anschließt, den radial inneren Abschnitt der Rillenflanke (2) bildet und innerhalb einer axialen Breite (b₁) und in einer radialen Höhe (h₁) ausgebildet ist und wobei der zweite Radius (7) an den ersten Radius (6) unter Bildung einer sich in etwa parallel zur Rillenerstreckung erstreckenden Kante (8) anschließend angeordnet ist und den radial oberen Abschnitt der Rillenflanke (2) bildet, wobei der zweite Radius (7) innerhalb einer axialen Breite (b₂) und in einer radialen Höhe (h₂) ausgebildet ist und dass die zwei Radien über die gesamte Rillenerstreckung an der Rillenflanke ausgebildet sind.

2. Fahrzeugluftreifen nach Anspruch 1,
**dadurch gekennzeichnet, dass** die Höhe h₂ ≥ h₁ ist, wobei h₁ ≥ 2mm ist.

3. Fahrzeugluftreifen nach einem oder mehreren der vorangehenden Ansprüche,
**dadurch gekennzeichnet, dass** beide Flanken (2) einer Rille durch je den ersten (6) und zweiten (7) Radius gebildet werden.

4. Fahrzeugluftreifen nach einem oder mehreren der vorangehenden Ansprüche,
**dadurch gekennzeichnet, dass** beide Flanken (2) einer Rille symmetrisch ausgebildet sind.

5. Fahrzeugluftreifen nach einem oder mehreren der vorangehenden Ansprüche 1-3,
**dadurch gekennzeichnet, dass** beide Flanken (2) einer Rille unsymmetrisch ausgebildet sind.

6. Fahrzeugluftreifen nach einem oder mehreren der vorangehenden Ansprüche,
**dadurch gekennzeichnet, dass** der radial innen angeordnete Radius (6) 3,5mm und der radial außen angeordnete Radius (7) 11 mm beträgt.

7. Fahrzeugluftreifen nach einem oder mehreren der vorangehenden Ansprüche 1-3, 5, **dadurch gekennzeichnet, dass** b₁ = konstant ist, während b₂ nicht konstant ist.

## Claims

1. Vehicle tyre having a tread strip which has positive profiles (1), such as blocks, strips or block-like profile elements, which are formed by circumferential grooves and other grooves, wherein the grooves are delimited on the side by groove flanks (2) and radially to the inside (4) by groove bottoms (3), wherein, as viewed in a sectional plane which lies perpendicularly with respect to the extent of that groove which is delimited on the side by said groove flank (2), at least one groove flank (2) is formed by radii (6, 7) which adjoin one another axially in order to broaden the groove width radially to the outside (5), wherein the radii (6, 7) are configured so as to protrude convexly in the direction of the positive profile (1), or the radii (6, 7) are configured so as to protrude concavely in the direction of the groove, **characterized in that** the groove flank is formed from two radii (6, 7) which adjoin one another axially, wherein the first radius (6) which adjoins the groove bottom (3) forms the radially inner section of the groove flank (2) and is configured within an axial width (b₁) and at a radial height (h₁), and wherein the second radius (7) is arranged so as to adjoin the first radius (6) with the formation of an edge (8) which extends approximately parallel to the groove extent and forms the radially upper section of the groove flank (2), wherein the second radius (7) is configured within an axial width (b₂) and at a radial height (h₂), and **in that** the two radii are configured on the groove flank over the entire groove extent.

2. Pneumatic vehicle tyre according to Claim 1, **characterized in that** the height h₂ is ≥ h₁, where h₁ is ≥ 2 mm.

3. Pneumatic vehicle tyre according to one or more of the preceding claims, **characterized in that** both flanks (2) of a groove are formed by in each case the first (6) and second (7) radius.

4. Pneumatic vehicle tyre according to one or more of the preceding claims, **characterized in that** both flanks (2) of a groove are configured symmetrically.

5. Pneumatic vehicle tyre according to one or more of the preceding Claims 1 to 3, **characterized in that** both flanks (2) of a groove are configured asymmetrically.

6. Pneumatic vehicle tyre according to one or more of the preceding claims, **characterized in that** the radius (6) which is arranged radially on the inside is 3.5 mm and the radius (7) which is arranged radially on the outside is 11 mm.

7. Pneumatic vehicle tyre according to one or more of the preceding Claims 1 to 3 and 5, **characterized in that** b₁ is constant, whereas b₂ is not constant.

## Revendications

1. Pneu de véhicule comprenant une bande de roulement qui présente des parties profilées positives (1) formées par des rainures périphériques et d'autres rainures, telles que des blocs, des bandes ou des éléments profilés de type blocs, les rainures étant limitées latéralement radialement vers l'intérieur (4) par des flancs de rainure (2) et par des fonds de rainure (3), au moins un flanc de rainure (2) - considéré dans un plan en coupe qui s'étend perpendiculairement à l'étendue de la rainure qui est limitée latéralement par ce flanc de rainure (2) -, pour élargir la largeur de rainure radialement vers l'extérieur (5), étant formé par des rayons axialement adjacents (6, 7), les rayons (6, 7) étant réalisés en saillie de manière convexe dans la direction de la partie profilée positive (1) ou les rayons (6, 7) étant réalisés en saillie de manière concave dans la direction de la rainure,
**caractérisé en ce que** le flanc de rainure est formé de deux rayons (6, 7) axialement adjacents, le premier rayon (6) qui se raccorde au fond de rainure (3) formant la portion radialement interne du flanc de rainure (2) et étant réalisé à l'intérieur d'une largeur axiale (b₁) et à une hauteur radiale (h₁), et le deuxième rayon (7) étant disposé de manière à se raccorder au premier rayon (6) en formant une arête (8) s'étendant approximativement parallèlement à l'étendue de la rainure et formant la portion radialement supérieure du flanc de rainure (2), le deuxième rayon (7) étant réalisé à l'intérieur d'une largeur axiale (b₂) et à une hauteur radiale (h₂), et **en ce que** les deux rayons sont réalisés sur toute l'étendue de la rainure au niveau du flanc de rainure.

2. Pneu de véhicule selon la revendication 1, **caractérisé en ce que** la hauteur h₂ ≥ h₁, avec h₁ ≥ 2 mm.

3. Pneu de véhicule selon l'une quelconque ou plusieurs des revendications précédentes, **caractérisé en ce que** les deux flancs (2) d'une rainure sont formés à chaque fois par le premier (6) et le deuxième (7) rayon.

4. Pneu de véhicule selon l'une quelconque ou plusieurs des revendications précédentes, **caractérisé en ce que** les deux flancs (2) d'une rainure sont réalisés de manière symétrique.

5. Pneu de véhicule selon l'une quelconque ou plusieurs des revendications précédentes 1 à 3, **caractérisé en ce que** les deux flancs (2) d'une rainure sont réalisés de manière asymétrique.

6. Pneu de véhicule selon l'une quelconque ou plusieurs des revendications précédentes, **caractérisé en ce que** le rayon disposé radialement à l'intérieur (6) mesure 3,5 mm et le rayon disposé radialement à l'extérieur (7) mesure 11 mm.

7. Pneu de véhicule selon l'une quelconque ou plusieurs des revendications précédentes 1 à 3, et 5, **caractérisé en ce que** b₁ est constante tandis que b₂ n'est pas constante.
